# FASCICULE DE BREVET EUROPEEN

(11) **EP 3 304 409 B1**
(45) Date de publication et mention de la délivrance du brevet: **07.08.2019**
(21) Numéro de dépôt: 16733205.5
(22) Date de dépôt: 08.06.2016
(51) Int. Cl.: G06F 16/11, G06F 21/64, H04L 29/06, G06F 21/62, G06F 21/60, H04L 9/14, H04L 9/32

(54) **SÉCURISATION DE DONNÉES NUMÉRIQUES**
SICHERUNG VON DIGITALEN DATEN
SECURING DIGITAL DATA

(30) Priorité: 08.06.2015 FR 1501179
(43) Date de publication de la demande: 11.04.2018
(73) Titulaire: Rietsch, Jean-Marc, Marie-Joseph, 06360 Eze (FR)
(72) Inventeur: Rietsch, Jean-Marc, Marie-Joseph, 06360 Eze (FR)
(74) Mandataire: IPAZ
(86) Numéro de dépôt international: PCT/IB2016/053357
(87) Numéro de publication internationale: WO 2016/199034

(56) Documents cités:
- US-A1- 2010 058 476
- Rick Copeland: "GridFS: The MongoDB Filesystem", , 25 mars 2012 (2012-03-25), XP055251683, Extrait de l'Internet: URL:https://web.archive.org/web/2015050602 0142/http://blog.pythonisito.com/2012/05/g ridfs-mongodb-filesystem.html [extrait le 2016-02-19]
- LING CHIH WEI ET AL: "InterCloud RAIDer: A Do-It-Yourself Multi-cloud Private Data Backup System", 4 janvier 2014 (2014-01-04), CORRECT SYSTEM DESIGN; [LECTURE NOTES IN COMPUTER SCIENCE; LECT.NOTES COMPUTER], SPRINGER INTERNATIONAL PUBLISHING, CHAM, PAGE(S) 453 - 468, XP047270101, ISSN: 0302-9743 ISBN: 978-3-642-22877-3 le document en entier
- David Buschman: "mongofile:usage:/how/to/use/this.lib", , 23 novembre 2014 (2014-11-23), XP055251722, Extrait de l'Internet: URL:https://github.com/dbuschman7/mongoFS/ blob/master/usage.md [extrait le 2016-02-19]

## Description

La présente invention se rapporte au domaine de la sécurisation des données numériques lors de leur stockage ou de leur archivage.

L'invention concerne, plus particulièrement, un procédé permettant, d'une part, d'accroître la sécurisation du stockage et de l'archivage de données numériques de provenance quelconque et, d'autre part, en raison de la conception même dudit procédé, de moduler le niveau de sécurité qui peut être sélectionné en fonction de la nature et de l'usage desdites données numériques.

A côté des dispositifs connus de chiffrement de données, il existe aujourd'hui plusieurs logiques de stockage sécurisé de données de l'information numérique parmi lesquelles on peut citer :
- les technologies RAID (Redundant Array of Indépendant Disks) qui consiste à stocker un fichier, découpé en morceaux, sur des disques différents suivant plusieurs niveaux de découpage et de sécurité. Ainsi, différents types de stockages RAID sont connus et ils se distinguent notamment par les systèmes de redondance utilisés ;
- le procédé de stockage de l'information, dit CAS, (Content Adresses Stockage) qui permet l'accès à des données enregistrées dans un espace de stockage en utilisant une clé d'identification dont la conservation est nécessaire pour retrouver les données conservées.

Parallèlement, dans le secteur des télécommunications, sont bien connues des logiques de transmission par paquets qui consistent à découper un fichier de données à transmettre en une pluralité de paquets de données totalement indépendants et à reconstituer l'ensemble du fichier lorsque tous les paquets sont arrivés à destination. Par exemple, le réseau public TRANSPAC opérationnel dès 1978.

Par contre, l'assemblage des différents concepts de l'art antérieur n'a encore jamais été mis en oeuvre.

Par ailleurs, les procédés de l'art antérieur nécessitent beaucoup de ressources informatiques et requièrent une organisation ou des dispositifs complexe(s).

De plus, ils n'offrent pas la possibilité d'adapter le niveau de sécurité à la nature des données à protéger.

Rick Copeland: "GridFS: The MongoDB Filesystem", https://web.archive.org/web/20150506020142/ http://blog.pythonisito.com/2012/05/gridfs-mongodb-filesystem.html (XP055251683) divulgue un procédé de la sécurisation de données numériques à des fins de stockage ou d'archivage.

### Résumé de l'invention

Nous proposons ici un dispositif permettant d'éclater un fichier de données numériques en différents éléments qui pourront ensuite être stockés chacun sur des espaces distincts, de préférence à des endroits physiques différents et géographiquement distants. Ce mode de stockage s'appuie sur la logique actuelle du « cloud ». On ne sait pas vraiment où sont stockées les informations mais on peut les interroger et les retrouver sans problème. Quoiqu'il en soit, en matière de « cloud », les informations sont stockées dans leur ensemble à un endroit déterminé de telle sorte que leur confidentialité n'est absolument pas assurée.

Le dispositif proposé ici assure une forte confidentialité des données dans la mesure où leur accès direct sur les baies de stockage où elles sont conservées ne permettra jamais d'avoir la complétude des données car elles auront été découpées au préalable en fragments ou blocs. Par ailleurs, cette technique s'applique quel que soit le dispositif de stockage utilisé qui pourra ou non encore renforcer la sécurité des données.

Seul, celui qui possède les droits d'accès pourra rapatrier l'ensemble des fragments de façon cohérente.

Un premier but de l'invention est d'associer selon une combinaison nouvelle plusieurs techniques, en partie connues per se, en vue d'améliorer la sécurisation globale du stockage ou de l'archivage de données numériques dont les éléments binaires sont regroupés dans un fichier d'origine, notamment en permettant d'améliorer chacun des critères sécuritaires que sont la disponibilité, l'intégrité, la confidentialité et la traçabilité desdites données.

Dans ce cadre, un premier aspect de l'invention concerne l'identification, l'authentification de l'initiateur (personne physique ou matériel) d'une requête auprès du Centre de Gestion du procédé de l'invention relative au stockage ou à l'archivage d'un fichier initial F0 de données numériques, dans des conditions assurant la garantie de leur origine et de leur intégrité, de la part du Centre de Gestion.

Un second aspect de l'invention se rapporte au traitement dudit fichier initial F0 de données numériques en vue de le restructurer sous forme d'un certain nombre de blocs indépendants et identifiables et regroupés dans le fichier de blocs FB.

Un troisième aspect de la présente invention est relatif à la mise en oeuvre de la répartition des blocs identifiés et formatés au sein d'une pluralité de sites tiers de stockage ou d'archivage, un site pouvant stocker plusieurs blocs et un bloc pouvant être présent dans plusieurs sites.

On notera que les modes fonctionnels et les paramètres opérationnels du procédé de l'invention sont attribués à chaque bloc et sont indiqués dans les champs spécifiques constituant le format dudit bloc.

Après lecture de chaque bloc, un dispositif Emetteur/Récepteur transmet les blocs de données vers leurs sites de stockage dédiés et, parallèlement, l'Unité Centrale de Traitement (UCT) construit une table dite « Table cartographique » permettant essentiellement d'associer le code d'identification unique d'un bloc et le nombre et les adresses des sites respectifs de stockage dudit bloc. L'importance de cette Table cartographique est grande dans la mesure où elle ne contient aucune référence aux éléments binaires des données attribuées à chaque bloc mais où, elle seule, permet de récupérer l'ensemble des blocs complets répartis dans une pluralité de sites, ce qui constituera un processus préalable à toute reconstitution du fichier d'origine F0.

En conséquence, le procédé de l'invention doit mettre en oeuvre tous moyens connus appropriés pour assurer la sécurisation de cette Table cartographique.

Dans le prolongement de l'objectif visant à renforcer la sécurisation des données numériques, un quatrième aspect de l'invention est relatif au chiffrement facultatif des données attribuées aux différents blocs à l'aide de l'application de divers modes de chiffrement faisant appel à des algorithmes et à des clés, ces modes pouvant varier d'un bloc à l'autre.

La connaissance desdits modes sera évidemment nécessaire au moment du déchiffrement des données. Cependant, à des fins de sécurité, les algorithmes et clés utilisés ne seront pas intégrés au sein d'un champ quelconque du format de bloc mais, par contre, ils seront mémorisés dans la Table cartographique correspondante dont les caractéristiques ont déjà été évoquées.

Toujours dans le même objectif, un cinquième aspect de l'invention se rapporte au calcul de l'empreinte de chaque bloc dont le résultat sera également stocké dans la Table cartographique et pourra ainsi permettre de vérifier l'intégrité des données attribuées à chaque bloc lors de leur retour en provenance des sites dédiés afin de reconstituer le fichier d'origine F0.

Un second but de l'invention est de permettre de sélectionner le Niveau de Sécurité NS optimal que l'on souhaite mettre en oeuvre en fonction de la nature des données, de leur importance dans les divers domaines qu'elles concernent, ou encore, de leur confidentialité et de leur pérennité.

Un sixième aspect de l'invention décrit les moyens qui conduisent à une sélection possible du Niveau de Sécurité NS. Parmi ces moyens, l'élément essentiel se présente sous la forme d'une

Table de Décision qui définit, pour différents niveaux de sécurité, du plus bas au plus élevé, les modes fonctionnels et les valeurs des paramètres opérationnels permettant d'atteindre chacun des Niveaux de Sécurité prévus dans la Table de Décision .

Ledit Niveau de Sécurité NS est sélectionné lors de la saisie du fichier d'origine F0 et la Table de Décision est interprétée et exécutée par l'UCT du Centre de Gestion jusqu'à obtention de la Table cartographique correspondante.

Un septième aspect de l'invention concerne la reconstitution du fichier initial F0 avec l'aide des Tables cartographiques conservées en mémoire et sécurisées, lesquelles ne contiennent aucune des données à protéger mais apportent les informations nécessaires à une telle reconstitution.

### Brève description des Dessins

L'invention sera mieux comprise à l'aide de la description détaillée ci-dessous et des figures annexées dans lesquelles :
La figure 1 représente un schéma fonctionnel de la première phase du procédé de l'invention.
La figure 2 représente un schéma fonctionnel de la deuxième phase du procédé de l'invention complétée par la mise en oeuvre du calcul d'empreinte facultatif de chaque bloc.
La figure 3 représente un schéma fonctionnel de la troisième phase du procédé de l'invention.
La figure 4 représente un schéma fonctionnel de la mise en oeuvre du processus facultatif de chiffrement des données attribuées à chaque bloc.
La figure 5 représente un schéma fonctionnel du procédé de l'invention mettant en oeuvre la sélection du Niveau de Sécurité.
Les figures 6a, 6b, 6c et 6d représentent des schémas fonctionnels partiels du processus de reconstitution du fichier initial F0.

### Description de quelques modes de réalisation

Dans la suite on utilisera indifféremment les termes stocker et archiver, ou stockage et archivage.

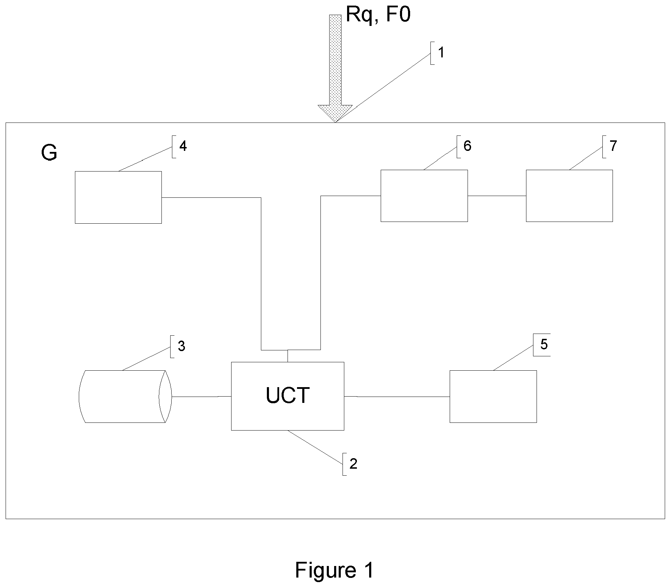

La **Figure 1** représente le schéma fonctionnel du premier aspect de la présente invention.

Une requête R_{q} est adressée par un Demandeur au Centre de Gestion (G) chargé du stockage ou de l'archivage de données numériques et, plus particulièrement, d'assurer la sécurisation desdites données se présentant sous la forme d'un fichier d'origine F0 enregistré sur un support quelconque.

Le Centre de Gestion (G) 1 dispose de moyens appropriés :
- pour identifier et authentifier le Demandeur, et pour apporter la preuve de l'existence desdites données à la date de la requête;
- pour apporter la garantie de l'origine et de l'intégrité du fichier de données que le Centre de Gestion 1 s'engage à stocker ou à archiver en assurant de maintenir leur intégrité, leur confidentialité et leur pérennité.

Pour ce faire, une base de données clients 3 associée à une horloge 4 permet d'atteindre le premier objectif susdit, mais, pour les autres garanties, l'Unité Centrale de Traitement (UCT) 2, associée à des moyens de calcul d'empreinte 6 du fichier F0 sont nécessaires, pouvant ainsi conduire à une signature électronique 7, dans le cas où le signataire est une personne physique, ou à un cachet électronique 7 si le signataire est une personne morale ou une machine.

On peut également, par exemple, calculer ladite empreinte et l'envoyer à un service d'horodatage électronique qui associe à cette empreinte un numéro d'ordre, une date et une heure et scelle l'ensemble.

Un mode préféré de réalisation de la présente invention envisage, de plus, de réaliser des signatures électroniques en s'appuyant sur un algorithme de chiffrement asymétrique fondé sur l'usage d'un bi-clé. Le principe consiste, après le calcul de l'empreinte du fichier, à chiffrer cette dernière avec la clé privée dont, seul, le signataire a la maîtrise.

L'ensemble de ces précautions ayant été pris, les données numériques du fichier d'origine F0 ainsi que l'empreinte E(F0) du fichier F0 sont transférées dans la mémoire système 5 du Centre de Gestion 1.

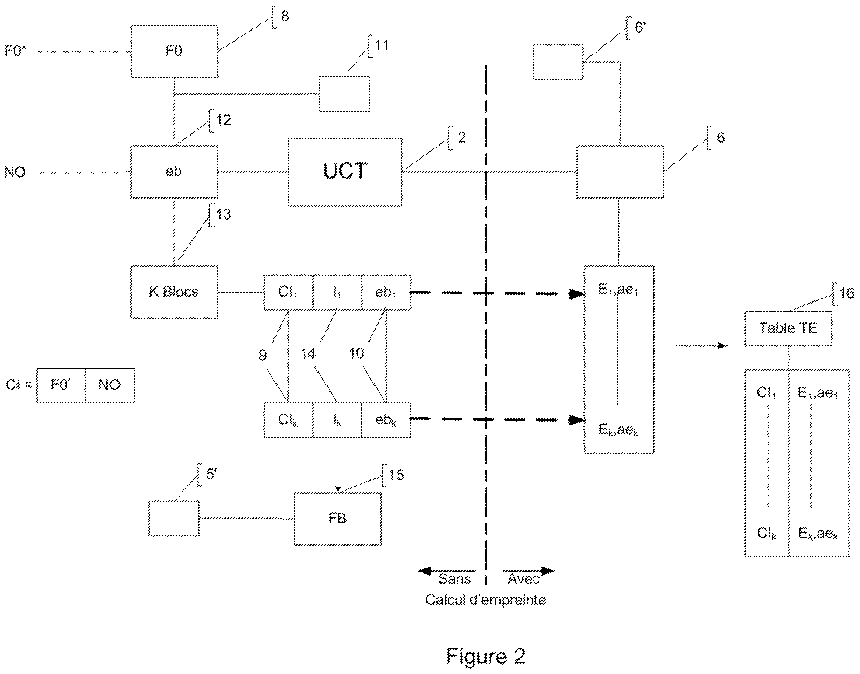

Le second aspect de la présente invention est illustré par la représentation du schéma fonctionnel de la **figure 2** concernant un mode de réalisation de la seconde phase du procédé de l'invention et destiné à restructurer le fichier d'origine F0 8 sous forme d'une pluralité de blocs de données indépendants et identifiables.

On désigne par « bloc » une suite d'éléments binaires prélevés, dans leur ordre initial, à partir des données numériques du fichier F0 8 et se présentant sous un format de plusieurs champs parmi lesquels :
- un premier champ réservé au code unique d'identification CI 9 dudit bloc constitué d'une étiquette F0* spécifique du fichier F0 et du Numéro d'Ordre NO assigné de façon définitive au dit bloc lors de sa formation ;
- un deuxième champ, dit Champ de Données 10, regroupant les éléments binaires des données attribuées au dit bloc ;
- plusieurs autres champs destinés à des indicateurs opérationnels et dont les contenus respectifs évolueront au cours du processus, comme cela sera décrit ultérieurement.

Les blocs sont construits de telle façon que l'ensemble des éléments binaires, pris dans leur ordre initial, des données du fichier d'origine F0 vérifie une relation d'identité biunivoque avec l'ensemble des éléments binaires des données contenues dans la totalité des blocs considérés successivement selon leur Numéro d'Ordre NO.

Pour la formation d'un bloc, l'UCT 2 associée, à un compteur 11, exécutant les instructions d'une première loi de programmation prélève 12, à partir du fichier F0 8, un certain nombre « l » d'éléments binaires « eb » dans leur ordre initial pour remplir le champ « Données » 10 du bloc en formation et il attribue simultanément à ce dernier, dans le champ dédié, le code d'identification unique CI 9 constitué de l'étiquette F0* spécifique du fichier F0 et du Numéro d'Ordre NO indicateur de la position des lᵢ éléments binaires prélevés dans le fichier F0 8 et attribués au dit bloc « i ».
Le nombre « l » représente la taille du bloc.

Ladite première loi de programmation associée à la formation des blocs 13 définit le premier paramètre opérationnel que constitue le nombre total de blocs « k », sachant que la confidentialité des données sera d'autant meilleure que le nombre de blocs « k » sera grand.

Ladite première loi détermine également un second paramètre opérationnel en imposant que la taille « l » des blocs soit constante pour l'ensemble des blocs (à l'unité près) ou soit variable d'un bloc à l'autre, le fait de rendre les blocs de taille variable contribuant, comme l'augmentation du nombre « k », à l'amélioration de la confidentialité des données.

Selon un mode de réalisation, le processeur de l'UCT 2 exécutant les instructions de la première loi de programmation peut utiliser une procédure de comptage des éléments binaires, bloc par bloc, telle que la taille des blocs soit constante et, par exemple, égale à EB/k = 1, où EB représente le nombre total d'éléments binaires « eb » contenus dans le fichier F0 8, calculé automatiquement, par exemple, lors de la saisie dudit fichier F0 8 après examen de la requête R_{q} initiale.

Tous les blocs feront alors apparaitre dans le champ Taille de bloc 14, indicateur de la taille du bloc, une valeur « l ». Le dernier bloc peut éventuellement être incomplet selon la valeur du rapport EB/k et la taille « l' » de ce bloc sera inférieure à « l ».

Selon une autre option, la procédure de comptage des éléments binaires « eb » attribués à chacun des « k » blocs peut être aléatoire et les indicateurs lᵢ intervenant dans les champs Taille de bloc 14 respectifs seront, en conséquence, variables.

Si des problèmes de gestion de bloc apparaissaient liés à la taille physique de l'ensemble du bloc, des caractères de remplissage peuvent être utilisés pour que leur taille devienne égale.

Les blocs ainsi formés et formatés sont enregistrés les uns après les autres dans un fichier de blocs FB 15 que l'on peut stocker dans la mémoire du système 5 ou, de préférence, dans une antémémoire auxiliaire 5' d'accès plus rapide, ledit fichier de blocs FB 15 étant, dans un mode préféré de réalisation, constitué d'une simple file d'attente, par exemple, de type FIFO.

La **figure 2** représente dans sa partie gauche (sans calcul d'empreinte des blocs), le contenu des blocs 9, 10, 14 du fichier de blocs FB 15 à ce stade du procédé, illustrant le code d'identification 9 (étiquette du fichier FO* et Numéro d'Ordre NO du bloc), l'indicateur de taille de bloc lᵢ et les éléments binaires ebᵢ attribués à ce bloc.

Dans un mode préféré de réalisation, illustré sur la partie droite de la figure 2 (avec calcul d'empreinte des blocs), un traitement supplémentaire des blocs destiné, en particulier à s'assurer, à tout moment, de l'intégrité des éléments binaires « eb » attribués à chaque bloc, consiste à calculer l'empreinte de chaque bloc dès sa formation par les moyens classiques de calcul 6 disposant de plusieurs algorithmes possibles stockés en 6', et, de préférence, en utilisant deux algorithmes d'empreintes différents. Les résultats Eᵢ des calculs d'empreintes de bloc sont regroupés dans une première table, dite « Table d'empreinte » TE 16 constituée essentiellement de deux colonnes permettant d'associer à chaque code d'identification de bloc CIᵢ la valeur d'empreinte correspondante Eᵢ associée à son algorithme de calcul aei.

Ladite Table d'empreinte TE 16 est agencée de telle façon qu'elle puisse être combinée sans difficulté avec d'autres tables, comme cela sera décrit ultérieurement. Il est également possible de prévoir d'enregistrer directement les informations de la Table d'empreinte dans la Table cartographique finale. Cette possibilité existe également pour les autres modes étudiés ci-après.

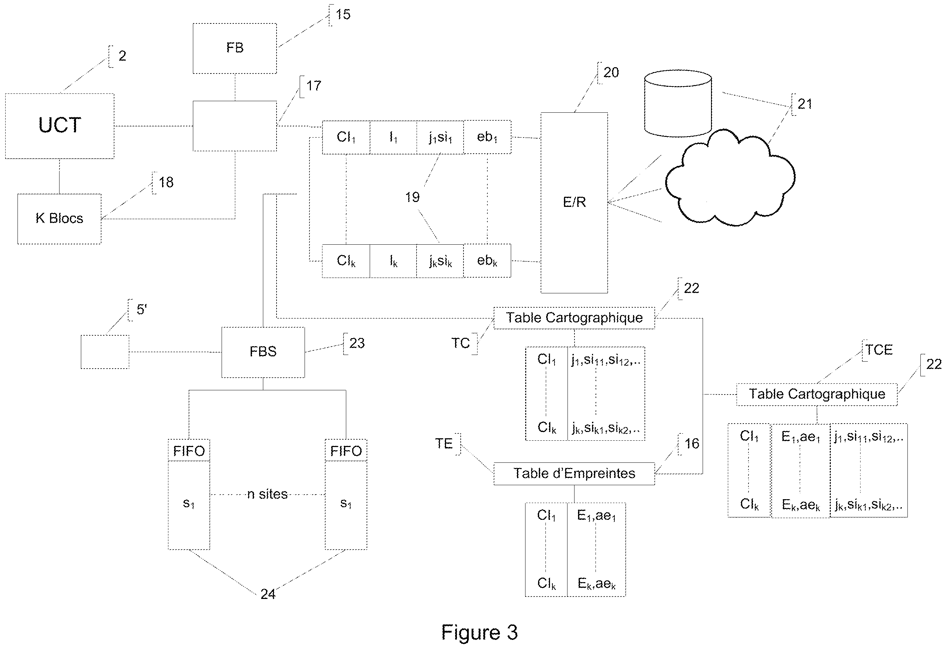

Dès que le fichier de blocs FB 15 est complet et conservé en mémoire 5 ou 5', le procédé active les instructions de la seconde loi de programmation mise en oeuvre selon la Figure 3.

La **Figure 3** représente un schéma fonctionnel d'un mode de réalisation du troisième aspect de l'invention.

Cette étape consiste à mettre en oeuvre une seconde loi de programmation dont l'exécution par le Processeur de l'UCT 2 comporte les étapes suivantes :
- attribuer 17 à chacun des différents blocs du fichier de blocs FB 15 une ou plusieurs adresse(s) de site(s) tiers disponible(s) enregistrée(s) en 18 pour le stockage ou l'archivage, les sites tiers pouvant être locaux, délocalisés, ou encore, résulter de la logique actuelle « cloud » ;
- indiquer, parallèlement, dans le champ « Site » approprié 19 du format de chaque bloc, le nombre jᵢ et les adresses siₖ respectives des sites dédiés. L'ensemble des blocs ainsi formatés constitue le nouveau fichier de blocs FBS 23 conservé, par exemple, en mémoire 5' ;
- puis transmettre, par des moyens de communication classiques et appropriés 20, chaque bloc vers le ou les site(s) de stockage dédié(s) 21.

Selon un mode préféré de réalisa ion, le Processeur de l'UCT 2 extrait les blocs du fichier FB 15, bloc par bloc, et à partir d'une liste d'adresses de sites 18 de stockage disponibles, il attribue, de façon aléatoire ou paramétrée, un ou plusieurs site(s) à chacun des blocs en écrivant le nombre jᵢ et les adresses siₖ correspondant(es) dans le champ « Site » 19 du format de bloc réservé à cet effet, puis il transfère le bloc au dispositif émetteur/récepteur E/R 20 qui, après lecture des adresses, transmet le bloc vers le ou les site(s) de stockage dédié(s) 21.

La multiplicité desdits sites de stockage augmente la complexité du regroupement des blocs ainsi disséminés et, en conséquence, renforce la confidentialité des données. Cependant, pour des raisons de gestion, il est possible de modérer le caractère aléatoire de l'attribution desdits sites en fixant, au préalable, un nombre maximal de sites pour un bloc donné et/ou pour l'ensemble des blocs.

La figure 3 montre également que, simultanément à l'attribution des sites, le Processeur de l'UCT 2 construit une table que nous désignerons sous le nom de Table cartographique TC 22. Cette dernière est constituée de deux colonnes, la première colonne enregistre successivement les codes d'identification CIᵢ de tous les blocs et la seconde colonne indique le nombre jᵢ et les adresses des sites siᵢ₁, siᵢ₂, ..., siᵢⱼ de stockage attribués à chaque bloc identifié dans ladite première colonne.

D'autres modes de réalisation sont envisageables pour l'homme de l'art. Par exemple, il est possible d'établir, à partir du fichier de blocs FBS 23, préalablement enregistré dans l'antémémoire 5', lequel regroupe tous les blocs après assignation des sites tiers, une pluralité de files d'attente 24, une par site dédié, également enregistrées dans l'antémémoire auxiliaire 5', et regroupant, chacune, un ensemble de blocs destinés au même site dédié, ce qui permet d'effectuer leur transfert vers les sites respectifs en une seule opération de transmission.

Après chaque émission, le dispositif Emetteur/Récepteur 20 du Centre de Gestion 1 reçoit les accusés de réception venant des différents sites. Si un éventuel incident se produit, une nouvelle émission du ou des bloc(s) en cause est effectuée, comme cela se passe de façon classique.

Cependant, cette procédure justifie également de garder en mémoire 5' le fichier FBS 23, tout en étant susceptible d'être effacé ultérieurement.

Ladite Table cartographique TC 22 présente un grand intérêt dans la mesure où elle ne contient aucune trace des éléments binaires attribués à chaque bloc mais où elle seule, permet de récupérer l'ensemble des blocs complets répartis dans une pluralité de sites de stockage, ce qui est un processus préalable à toute reconstitution ultérieure du fichier d'origine F0 8.

La Table cartographique TC 22 doit donc être sécurisée par des moyens classiques, par exemple, en étant conservée en mémoire 5 et sauvegardée sur le site du Centre de Gestion 1, mais elle peut également être conservée sur un ou plusieurs site(s) tiers distant(s), à condition d'être chiffrée afin de respecter la confidentialité recherchée.

Dans le cadre du mode préféré de réalisation qui met en oeuvre l'application du calcul d'empreinte 6 de chaque bloc et qui conduit à l'établissement de la Table d'empreintes TE 16, cette dernière 16 sera combinée avec le premier type de Table cartographique TC 22 pour aboutir à un second type de Table cartographique finale TCE 25 maintenant constituée de trois colonnes et associant à chaque bloc identifié par son code CIᵢ, à la fois ledit résultat du calcul d'empreinte correspondant et le nombre jᵢ et les adresses siᵢₗ,siᵢₖ, ... des sites de stockage dédiés au dit bloc.

La Table cartographique TCE 25, comme la Table cartographique TC 22 requière, pour les mêmes raisons déjà mentionnées, d'être sécurisées selon les mêmes moyens précédemment cités.

Après le dernier accusé de réception provenant du dernier site vers lequel le dernier bloc a été transmis, la Table cartographique TC ou la Table TCE ainsi complète est enregistrée dans la mémoire du système 5. Cela peut déclencher l'effacement des fichiers intermédiaires FB 15 et FBS 23 et celui du fichier d'origine F0 8 et, éventuellement, celui de leurs copies respectives.

En effet, la Table cartographique TC ou la Table TCE associée au contenu de tous les champs de chaque bloc stocké ou archivé dans les différents sites tiers, apportent toutes les informations nécessaires pour reconstituer, au moment souhaité, le fichier d'origine F0 8, ce qui incite, comme cela a déjà été suggéré, de sécuriser les Tables TC et TCE, seules aptes à rapatrier les blocs répartis entre les sites tiers.

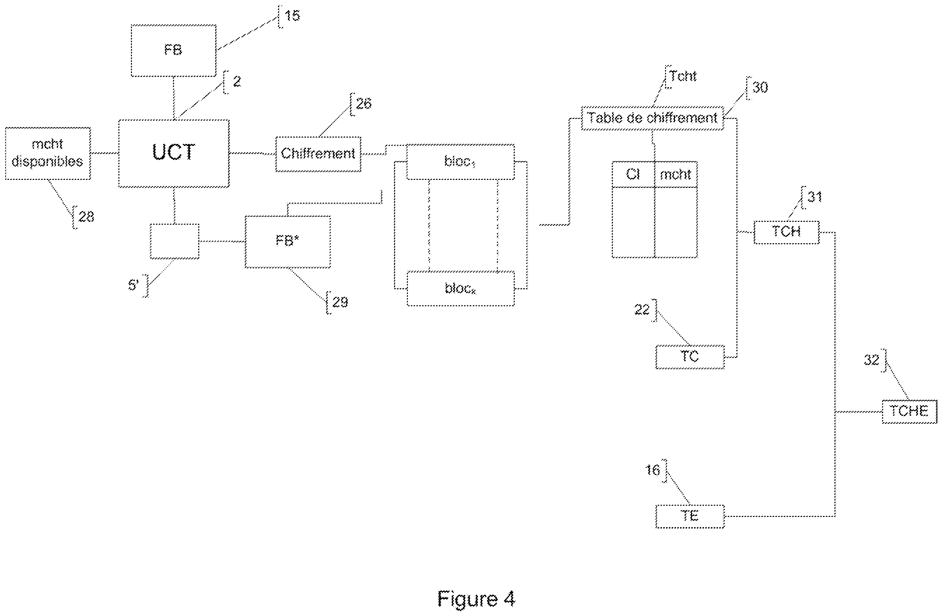

La **Figure 4** représente un schéma fonctionnel d'un autre mode préféré de réalisation mettant en oeuvre une procédure optionnelle permettant de renforcer la sécurisation des données et, notamment, leur confidentialité en faisant intervenir le chiffrement desdites données.

Comme cela est indiqué dans la figure 4, l'application du processus de chiffrement réalisé en 26 se produit, dans un souci de sécurité, au plus tôt après la formation d'un bloc.

Ainsi, par exemple, dès que le i^{ième} bloc est formé, c'est-à-dire que son code d'identification CIᵢ est déterminé ainsi que sa taille lᵢ et les éléments binaires ebᵢ qui lui sont attribués, le processeur de l'UCT 2 sélectionne, essentiellement de façon aléatoire parmi plusieurs modes (algorithmes et clés) de chiffrement (symbolisés par « mcht ») 28, un mode mchtᵢ par exemple, pour ledit premier bloc « i ».

Il est important de noter que, du mode de chiffrement « mcht » sélectionné en 28 on déduit également les informations nécessaires au déchiffrement desdites données. En conséquence, pour des raisons de sécurité, il est fondamental de ne pas intégrer le mode appliqué « mcht » au sein des blocs avant leur transfert dans une pluralité de sites de stockage dédiés.

Après application dudit mode « mcht », les données initiales « eb » sont remplacées par les données chiffrées « eb* » et le bloc correspondant à ces données chiffrées rejoint le nouveau fichier de blocs chiffrés FB* 29 qui est mémorisé dans l'antémémoire 5'.

Dès qu'un mode de chiffrement « mcht » est attribué à un bloc, simultanément, le Processeur de l'UCT 2 établit une table, dite « Table de chiffrement » Tcht 30 possédant deux colonnes, la première colonne répertoriant les codes d'identification CI des blocs et la seconde colonne associant à chaque code d'identification CIᵢ le mode de chiffrement mchtᵢ utilisé pour ce bloc.

En combinant la Table de chiffrement Tcht 30 avec le premier type de Table cartographique TC 22 obtenue après répartition des blocs dans leurs sites respectifs de stockage, on établit un troisième type de Table cartographique finale TCH 31 à trois colonnes, liant codes d'identification CI, modes de chiffrement « mcht », nombres « j » et adresses « si » des sites de stockage dédiés.

De la même façon, si l'option calcul des empreintes de blocs E est également appliquée, le quatrième type de Table cartographique finale TCHE 32, tenant compte de la Table d'empreintes TE 16, sera constitué de quatre colonnes liant codes d'identification CI, modes de chiffrement « mcht », empreintes E, nombres « j » et adresses « si » des sites de stockage dédiés.

Pour des raisons identiques, les Tables TCH et TCHE sont sécurisées, comme cela a été mentionné précédemment.

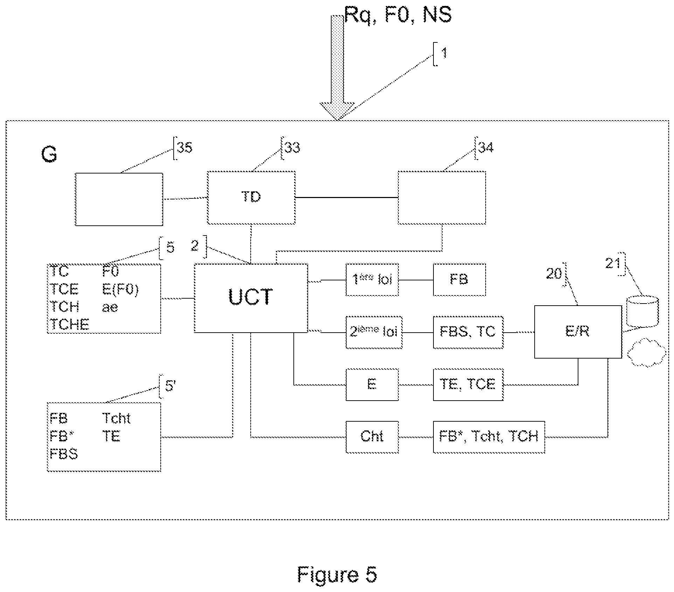

La **Figure 5** représente un schéma fonctionnel des moyens utilisés dans les aspects précédents de la présente invention en vue de les mettre en oeuvre pour répondre aux exigences d'un Niveau de Sécurité NS sélectionné au préalable.

En fonction de la nature, de la confidentialité, de la criticité ou autre des données à stocker ou à archiver, le Niveau de Sécurité souhaité peut varier et un Niveau de Sécurité optimal est souvent recherché par rapport au besoin réel de sécurité, mais également par rapport au délai de traitement, au coût et à la complexité des moyens de sécurisation impliqués.

L'élément central permettant de moduler le Niveau de Sécurité consiste à établir préalablement une Table de Décision TD 33 définissant les modes fonctionnels et les valeurs de paramètres opérationnels correspondant aux différents Niveaux de Sécurité sélectionnables NS, notamment lors de la saisie de la requête R_{q} de protection du fichier d'origine F0 8.

Selon un mode préféré de réalisation, les modes fonctionnels et paramètres opérationnels sélectionnés par la Table de Décision TD 33 en fonction d'un Niveau de Sécurité NS déterminé, concernent :
- le nombre de blocs k, sachant que plus k est élevé, plus la taille e des blocs aura tendance à diminuer et meilleure sera la confidentialité,
- le nombre de sites de stockage permettant d'améliorer également la confidentialité si le nombre de sites augmente,
- le nombre d'exemplaires, c'est-à-dire le nombre de sites stockant un même bloc, lesdits exemplaires pouvant intervenir en cas de défauts constatés relatifs à l'intégrité des blocs,
- l'exécution Oui/Non du calcul d'empreintes E pour chaque bloc permettant, si le choix est positif, de mieux assurer l'intégrité des blocs lors de la reconstitution du fichier d'origine F0,
- l'exécution Oui /Non du chiffrement des donnée permettant, si le choix est positif, de renforcer la confidentialité de ces données.

Une Table à consulter 35 regroupe l'ensemble des modes fonctionnels et des paramètres opérationnels disponibles dont les multiples combinaisons sont susceptibles de déterminer les différents Niveaux de Sécurité NS.

La Table de Décision TD 33 est mise en oeuvre par le processeur de l'UCT 2 après la sélection du Niveau de Sécurité NS.

Une fois que le Niveau de Sécurité NS est déterminé, les modes fonctionnels et les paramètres opérationnels correspondant au choix de la Table de Décision TD 33 sont enregistrés, par exemple, dans une antémémoire auxiliaire 34 réservée aux dits paramètres à des fins de contrôle en cas de dysfonctionnement éventuel ultérieur.

L'UCT 2 met alors en oeuvre tous les processus décrits précédemment de façon séparée pour mettre en évidence les différentes étapes fondamentales du procédé de l'invention en incluant les différentes options susceptibles d'être prises en compte par la Table de Décision 33.

Les Tables cartographiques finales, quels que soient leurs types, TC, TCE, TCH, TCHE sont, comme cela a déjà été décrit précédemment, transférées dans la mémoire système 5 et sécurisées de façon appropriée. Il est également possible de n'utiliser qu'une seule Table cartographique mise à jour directement au fur et à mesure de la constitution des blocs.

Après le retour de l'accusé de réception d'écriture du dernier bloc provenant du dernier site de stockage dédié et après la mise en oeuvre de la sécurisation desdites Tables cartographiques finales, notamment après leur enregistrement dans la mémoire système 5, il est possible d'envisager la suppression du fichier d'origine F0 8, à condition de conserver en mémoire 5 son empreinte E(F0) calculée lors de la saisie de la requête R_{q}, selon un algorithme déterminé par le Centre de Gestion 1.

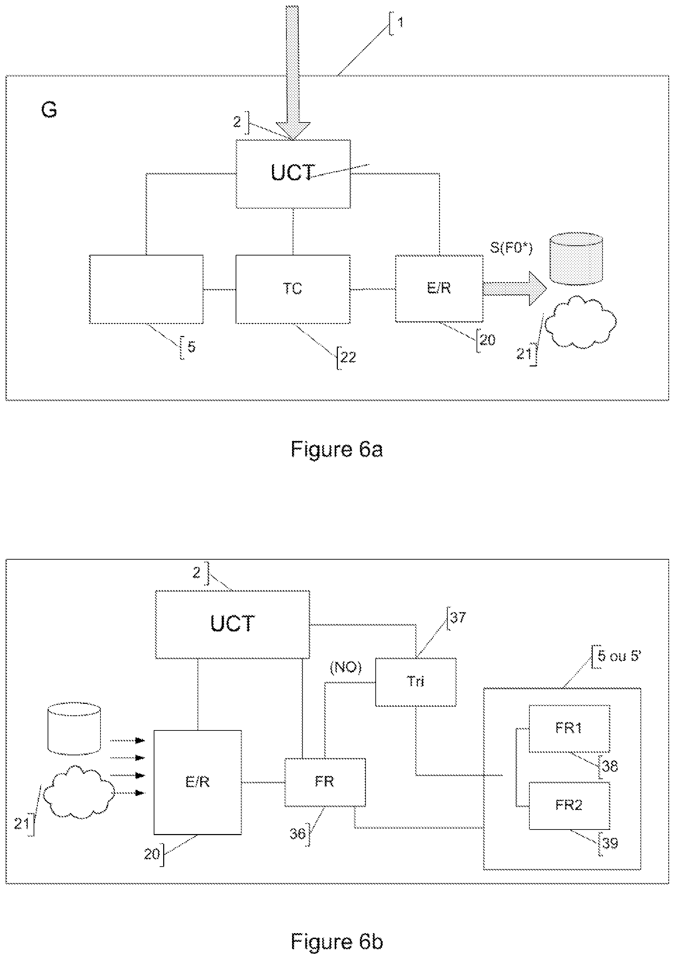

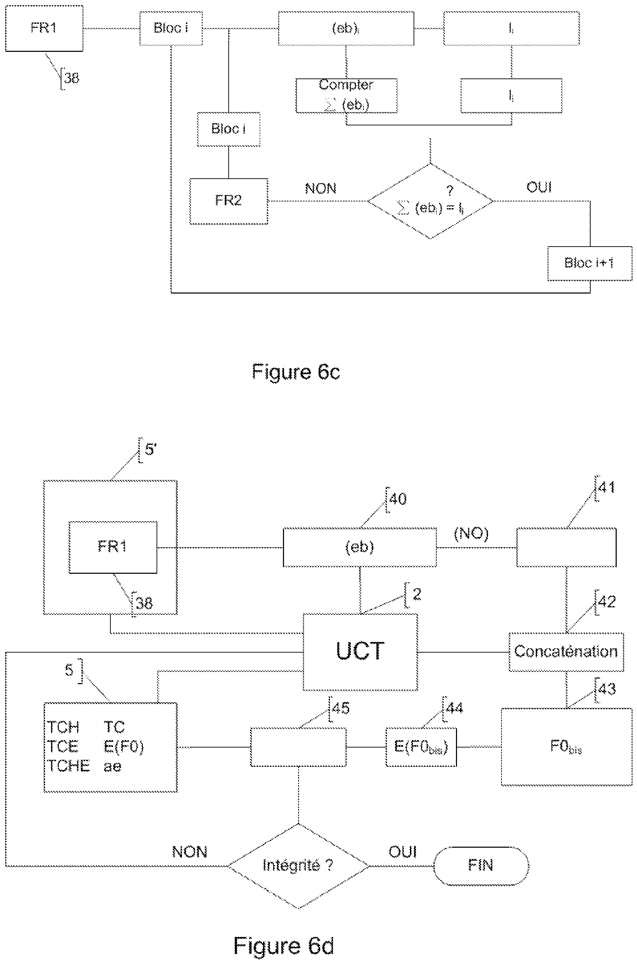

Les **Figures 6a, 6b****,** **6e** **et** **6d** représentent plusieurs schémas et un organigramme fonctionnels relatifs à la quatrième phase du procédé de l'invention dont la mise en oeuvre résulte d'une requête concernant la reconstitution du fichier d'origine F0 8.

Pour ce faire, une première étape, exécutée par l'UCT 2 (figure 6a), est d'émettre un signal « S » à destination de tous les sites de stockage dédiés dont les adresses sont lues dans la Table cartographique finale (TC, TCE, TCH, TCHE) 22, 25, 31, 32 conservée en mémoire 5 et par tous moyens appropriés de transmission.

Le signal « S » est conçu pour indiquer que les blocs à extraire se rapportent uniquement à ceux qui contiennent dans leur champ « Identification » (CI) le drapeau F0* spécifique du fichier d'origine F0.

Dans une seconde étape (figure 6b), le système de réception 20 rassemble tous les blocs qui lui parviennent des différents sites 21 dans un fichier de blocs FR 36.

L'UCT 2 met alors en oeuvre, sur les blocs du fichier FR 36, une procédure de tri selon un algorithme classique dont la clé de tri est le Numéro d'Ordre NO du bloc, sachant qu'à un Numéro d'Ordre NO ne correspond qu'un seul bloc et que ce Numéro figure dans le Code d'Identification CI du bloc, pour conduire à l'établissement de deux fichiers FR1, 38 et FR2, 39.

Le premier fichier FR1 38 contient un ensemble de blocs, lesquels diffèrent les uns des autres par au moins leur Numéro d'Ordre NO, le second fichier FR2 39 regroupant tous les blocs qui ont fait l'objet d'un stockage dans plusieurs sites dédiés et qui se présentent au moins comme des doublons.

A ce stade du procédé, une première vérification de son déroulement correct consiste à observer que le nombre de blocs du fichier FR1 38 est égal au nombre « k » de blocs du fichier d'origine F0.

De plus, un test relatif à l'intégrité des données attribuées à chaque bloc peut être effectué à partir du fichier FR1 38. Ainsi, la figure 6c présente l'organigramme fonctionnel associé audit test d'intégrité.

Pour tous les blocs du fichier FR1 38 le processus est le suivant : au bloc « i », on compte le nombre total d'éléments binaires ebᵢ dans le champ « Données » et on le compare à la valeur lᵢ inscrite dans le champ « Taille de bloc ». En cas d'égalité, le processus continue pour le bloc suivant i+1, sinon, en cas d'inégalité, il est possible de rechercher si le bloc « i » figure dans le fichier FR2 39 et le cycle analogue du test est repris.

Cela démontre un autre intérêt de stocker un bloc donné dans plus d'un site dédié en vue de s'assurer de l'intégrité des données qui lui ont été attribuées.

Un autre test d'intégrité est possible si le calcul d'empreinte de bloc est une option sélectionnée. Ainsi, à partir du fichier FR1 38, pour chaque bloc « i », un calcul d'empreinte Ei' est entrepris, en utilisant le même algorithme aeᵢ indiqué dans la Table cartographique finale TCE 25 ou TCHE 32 conservée en mémoire 5, laquelle donne également le résultat d'empreinte Eᵢ correspondant au même bloc « i » qui était présent dans le fichier d'origine F0.

La comparaison entre les empreintes Ei' et Eᵢ permet de vérifier l'intégrité des données après leur stockage.

La figure 6d représente l'étape finale de la reconstitution du fichier d'origine. Selon un mode de réalisation, l'UCT 2 prélève en 40 les éléments binaires présents dans le champ « Données » de chaque bloc du fichier FR1, 38 et les transfère dans une file d'attente 41 selon la même considération des Numéros d'Ordre NO que lors du prélèvement effectué en 12 au cours de la deuxième phase du procédé de l'invention (figure 2).

Une opération classique de concaténation 42 portant sur les enregistrements d'éléments binaires de la file d'attente 41 conduit au fichier final F0_{bis} 43 qui devrait être identique au fichier d'origine F0. Pour vérifier cette assertion, il suffit de comparer en 45 l'empreinte E(F0) du fichier d'origine F0 calculée par le Centre de Gestion 1 et conservée en mémoire 5, avec l'empreinte E(F0_{bis}) du fichier reconstitué F0_{bis} calculée en 44 par le Centre de Gestion 1 selon le même algorithme de calcul.

Lors de la sélection des options en vue de mieux assurer l'intégrité et la confidentialité des données à stocker par l'intermédiaire ou non de la Table de Décision 33, les Tables cartographiques finales TC 22, TCE 25, TCH 31 et TCHE 32 interviennent de façon décisive dans le processus de reconstitution du fichier d'origine F0.

En effet, elles apportent les informations essentielles nécessaires à ladite reconstitution, dans la mesure où, non seulement elles permettent de localiser les sites de stockage des différents groupes de données, mais également d'établir les relations :
- entre Code d'Identification CI, valeur d'Empreinte E et algorithme utilisé « ae », et/ou
- entre Code d'Identification CI et mode de chiffrement « mcht » dont la connaissance est fondamentale pour le déchiffrement ultérieur.

On notera également que toutes ces dernières informations indispensables à la reconstitution du fichier d'origine F0 n'apparaissent pas dans les blocs.

En conséquence, il est important d'insister sur le fait que lesdites Tables cartographiques finales TC 22, TCE 25, TCH 31 et TCHE 32 sont conservées dans la mémoire 5 du Centre de Gestion 1 et, de plus, sauvegardées ainsi que sécurisées par tous moyens comme cela a déjà été mentionné.

Différentes modifications peuvent être apportées à ce qui a été décrit ici dans les modes de réalisation et leur mise en oeuvre du procédé de l'invention sans pour autant s'écarter du champ de l'invention.

## Revendications

1. Procédé d'amélioration de la sécurisation de données numériques à des fins de stockage ou d'archivage, temporaire ou pérenne, **caractérisé en ce qu'**il comporte une combinaison de trois phases distinctes, le procédé étant mise en oeuvre sous contrôle d'un centre de gestion (G) (1),
la première phase consistant à :
a) identifier et authentifier une requête (R_{q}) d'un utilisateur souhaitant protéger ses propres données numériques présentées sous forme d'un fichier d'origine (FO) (8) ;
b) calculer (6) une empreinte (E(FO)) du fichier d'origine (FO) (8) selon un algorithme de calcul d'empreinte afin de constituer une preuve de l'existence desdites données à la date de ladite requête (Rq), ainsi que de garantir l'origine et l'intégrité desdites données en s'appuyant sur une signature électronique (7) ou un cachet électronique (7);
c) transférer lesdites données numériques et l'empreinte (E(FO)) dudit fichier d'origine (FO) (8) dans une mémoire d'un système (5) du centre de gestion, et
d) saisir, si nécessaire, des paramètres opérationnels requis pour le fonctionnement dudit procédé ;
la deuxième phase consistant à :
e) appliquer à une unité centrale de traitement (UCT) (2) du centre de gestion une première loi de programmation permettant de restructurer le fichier d'origine (FO) (8) sous forme d'une pluralité de blocs indépendants et identifiables (13) dont le nombre (K) et la taille (l), constante ou variable, sont déterminés dans ladite première loi, la concaténation desdits blocs devant permettre ultérieurement de reconstituer ledit fichier d'origine (FO) (8),
lesdits blocs étant structurés selon un format présentant un champ « Données » (10) destiné aux éléments binaires (eb) des données respectives attribuées spécifiquement à chacun desdits blocs et plusieurs champs réservés à des informations indiquant chacune une caractéristique utile relative au dit bloc, lesdites informations comprenant un code d'identification unique du bloc (CI) (9), et possiblement la taille (l) (14) dudit bloc,
l'ensemble des blocs ainsi formés et formatés constituant un fichier de blocs (FB) (15), lequel est enregistré en mémoire (5, 5') ; et la troisième phase consistant à :
f) faire appliquer par l'unité centrale de traitement (2) une deuxième loi de programmation permettant de transférer (17, 20) les blocs du fichier de blocs (FB) (15) vers au moins un d'une pluralité de sites tiers de stockage (21), chaque bloc correspondant à au moins un site de stockage,
les sites de stockage pouvant être locaux, distants ou traités en mode « cloud » et pouvant utiliser, de plus, en interne tous les moyens classiques de sécurisation ;
g) insérer (17) dans le format de chaque bloc un champ supplémentaire (19) destiné à contenir le nombre et les adresses du au moins un site tiers respectif vers lesquels ledit bloc doit être transféré, l'ensemble des blocs ainsi formatés étant regroupé dans un deuxième fichier de blocs (FBS) (23) ;
h) puis transférer en (20), par tous moyens de transmission appropriés (21), soit bloc par bloc, soit par site, l'ensemble des blocs dudit deuxième fichier de blocs (FBS) (23 ,24) vers les sites tiers respectifs ;
i) établir ensuite, à partir dudit deuxième fichier de blocs (FBS) (23) un premier type de table cartographique finale (TC) (22) se présentant sous la forme d'une table à deux colonnes, la première enregistrant les codes d'identification (CI) des blocs et la seconde associant à chaque dit code d'identification (CI) le nombre et les adresses du au moins un site tiers de stockage; et
j) transférer la table cartographique finale (TC) (22) ainsi obtenue dans la mémoire du système (5) et la sécuriser.

2. Procédé selon la revendication 1, **caractérisé, de plus, par** le fait de chiffrer (26) les données numériques contenues dans les blocs du fichier de blocs (FB) (15) selon des modes de chiffrement (mcht) (28) appropriés, un mode de chiffrement comprenant un algorithme de chiffrement et une clé de chiffrement, et pouvant varier d'un bloc à l'autre et transformer ainsi le fichier de blocs (FB) (15) en un fichier de blocs (FB*) (29) contenant les données chiffrées, etd'établir à des fins de sécurité, une table de chiffrement (Tcht) (30) permettant d'assurer la correspondance entre un bloc déterminé par son code d'identification unique (CI) et les modes de chiffrement (mcht) mis en oeuvre pour chiffrer les données dudit bloc, ladite table de chiffrement (Tcht) (30) étant destinée à être combinée avec ladite table cartographique (TC) (22) pour établir un deuxième type de table cartographique finale (TCH) (31) indiquant, pour chaque bloc, la correspondance unique entre code d'identification (CI), nombre (j) et adresses des sites tiers de stockage (si) et mode de chiffrement (mcht).

3. Procédé selon la revendication 1 ou la revendication 2, **caractérisé, de plus, par** le calcul (6) selon plusieurs algorithmes possibles (ae) de calcul d'empreinte d'une empreinte (E) de chaque bloc formé et formaté à l'étape e) (13) et l'opération de construire parallèlement une table d'empreintes (TE) (16) établissant la liaison unique entre code d'identification de bloc (CI) et empreinte (E) dudit bloc associée à l'algorithme (ae) de calcul d'empreinte utilisé,
de combiner ensuite ladite table d'empreintes (TE) (16) avec :
- soit la table cartographique finale (TC) (22) pour former un troisième type de table de cartographique finale (TCE) (25), à trois colonnes reliant de façon unique pour chaque bloc, code d'identification (CI), nombre et adresses des sites tiers de stockage (j, si) et empreinte plus algorithme de calcul d'empreinte (E, ae),
- soit la table de chiffrement (Tcht) (30) pour former un quatrième type de table cartographique finale (TCHE) (32) à quatre colonnes reliant, de façon unique, pour chaque bloc, code d'identification (CI), nombre et adresses des sites tiers de stockage (j, si), empreinte plus algorithme de calcul d'empreinte (E, ae), et mode de chiffrement (mcht), et de transférer la table cartographique finale obtenue (TC, TCE, TCH, TCHE) (22, 25, 31, 32), dans la mémoire du système (5) et de la sécuriser.

4. Procédé selon les revendications 1, 2 et 3, **caractérisé, de plus, en ce qu'**il permet une modulation d'un niveau de sécurité (NS) du stockage ou de l'archivage d'un ensemble de données numériques regroupées dans un fichier d'origine (FO) (8), une table de décision (TD) (33) définissant des combinaisons de modes fonctionnels et de paramètres opérationnels qui conduisent à différents niveaux de sécurité (NS) déterminés, un niveau de sécurité (NS) pouvant être sélectionné lors de la saisie du fichier d'origine (FO) (8),
les modes fonctionnels et les paramètres opérationnels définissant un niveau de sécurité (NS) se rapportant :
- au nombre de blocs (k) ;
- à la taille (l) fixe ou variable des blocs;
- au nombre total de sites tiers (j);
- au nombre d'exemplaires, c'est-à-dire au nombre de sites tiers différents stockant le même bloc ;
- à l'exécution ou non du calcul (6) d'empreintes de blocs (E);
- à l'exécution ou non du processus de chiffrement des données;
l'unité centrale de traitement (UCT) (2), après la sélection d'un niveau de sécurité (NS) donné, prend en compte les modes fonctionnels et les paramètres opérationnels définis dans la table de décision (TD) (33) correspondant au niveau de sécurité (NS) sélectionné et les transfère dans une antémémoire auxiliaire supplémentaire (34) connectée à l'unité centrale de traitement (UCT) (2) et réservée aux modes et paramètres utilisés pour obtenir ledit niveau de sécurité puis exécute les instructions respectives associées à ladite sélection;
les différentes tables cartographiques finales obtenues (TC, TCE, TCH, TCHE) (22, 25, 31, 32) étant transférées dans la mémoire du système (5) et sécurisées.

5. Procédé selon la revendication 1, **caractérisé, de plus, en ce qu'**il comporte une quatrième phase relative à la reconstitution, sur requête, du fichier d'origine (FO) comportant les étapes suivantes :
k) émettre, à partir du centre de gestion (1), vers tous les sites de stockage dédiés et répertoriés dans la table cartographique (TC) conservée dans la mémoire du système (5), un signal d'extraction (S(FO*)) hors des moyens de stockage présents dans lesdits sites dédiés, de tous les blocs identifiés par le drapeau (FO*) spécifique du fichier d'origine (FO) (8) ;
l) recevoir tous les blocs identifiés ainsi transmis par les sites de stockage dédiés dans un fichier de blocs de reconstitution (FR) (36) conservé dans une antémémoire (5') ;
m) à partir du fichier de blocs de reconstitution (FR), créer un premier fichier (FR1) (38) dans lequel tous les blocs identifiés apparaissent une fois et une seule, et un second fichier (FR2) (39) dans lequel n'apparaissent que les blocs stockés dans plus d'un site tiers dédié ;
n) à des fins de vérification de l'intégrité des données, comparer, dans le premier fichier (FR1) (38), et pour chaque bloc (CIᵢ), le nombre d'éléments binaires (ebᵢ) avec la valeur (lᵢ) indiquée dans le champ indiquant la taille du bloc correspondant ;
o) extraire les éléments binaires (ebᵢ) de tous les blocs du premier fichier (FR1) (38) dans un ordre convenu de numéros d'ordre (NO) assignés aux blocs lors de la formation initiale des blocs (13) et leur appliquer une opération de concaténation (42) pour reconstituer le fichier d'origine (FO_{bis}) (43) ;
p) afin de vérifier l'intégrité du fichier d'origine (FO) (8) et du fichier d'origine reconstitué (FO_{bis}) (43), comparer l'empreinte (E(FO)) du fichier d'origine (FO) conservée avec son algorithme de calcul d'empreinte (ae) dans la mémoire (5) du centre de gestion (1) avec une empreinte du fichier d'origine reconstitué (E(FO_{bis})) (44) calculée selon le même algorithme (ae).

6. Procédé selon les revendications 2 et 5, **caractérisé, de plus, en ce que** le chiffrement ayant été sélectionné pour renforcer la confidentialité des données stockées, la mise en oeuvre des étapes k) et l) conduit au dit fichier de blocs de reconstitution (FR) (36), contenant alors un ensemble de blocs dans lesquels les données sont chiffrées, les blocs étant déchiffrés utilisant le mode de chiffrement (mcht) correspondant à chaque bloc (CI) contenu dans la table cartographique finale (TCH) (31) conservée dans la mémoire (5),
les étapes de m) à p) restant fonctionnellement inchangées.

7. Procédé selon les revendications 3 et 5, **caractérisé, de plus, en ce que** le calcul d'empreinte de chaque bloc ayant été sélectionnée pour renforcer l'intégrité des données, la mise en oeuvre des étapes k) et l) conduit au dit fichier de blocs reconstitué (FR) (36) à partir duquel une empreinte de chaque bloc est calculée avec l'algorithme de calcul d'empreinte (aeᵢ) conservé en mémoire dans la table cartographique finale (TCE) (25) pour chaque bloc (CIᵢ), et comparée à l'empreinte correspondante (Eᵢ) présente dans ladite table cartographique finale (TCE) (25) pour conforter, en cas d'égalité, la qualité d'intégrité des données après leur stockage.

8. Procédé selon les revendications 4, 5, 6 et 7, **caractérisé, de plus, en ce que**, la mise en oeuvre de la table de décision (TD) (33) pouvant conduire, pour garantir une sécurisation maximale des données, à la sélection simultanée des options du chiffrement des données et du calcul d'empreinte de bloc, les étapes k) et l) conduisent audit fichier de blocs de reconstitution (FR) (36), dont les blocs subissent le processus de déchiffrement décrit dans la revendication 6 et le test de comparaison des valeurs d'empreinte de bloc décrit dans la revendication 7 en utilisant les informations contenues dans la table cartographique finale (TCHE) (32), conservée dans la mémoire (5), associant respectivement le code d'identification (CI) du bloc, le mode de chiffrement (mcht), la valeur d'empreinte et son algorithme de calcul (E, ae), les étapes de m) à p) restant fonctionnellement inchangées.

## Patentansprüche

1. Verfahren zur Verbesserung der Sicherung digitaler Daten zum Zweck der zeitweiligen oder dauerhaften Speicherung oder Archivierung, **dadurch gekennzeichnet, dass** es eine Kombination von drei unterschiedlichen Phasen aufweist, wobei das Verfahren unter der Kontrolle eines Verwaltungszentrums (G) (1) durchgeführt wird,
wobei die erste Phase aufweist:
a) das Identifizieren und Authentifizieren einer Anfrage (Rq) eines Nutzers, der seine in Form einer Originaldatei (FO) (8) vorliegenden eigenen digitalen Daten zu schützen wünscht;
b) das Berechnen (6) eines Fingerabdrucks (E(FO)) der Originaldatei (FO) (8) gemäß einem Fingerabdruckberechnungsalgorithmus, um einen Beweis der Existenz der genannten Daten zum Zeitpunkt der Anfrage (Rq) zu erstellen sowie den Ursprung und die Integrität der genannten Daten anhand einer elektronischen Signatur (7) oder eines elektronischen Siegels (7) zu garantieren;
c) das Übertragen der genannten digitalen Dateien und des Fingerabdrucks (E(FO)) der Originaldatei (FO) (8) in einen Speicher eines Systems (5) des Verwaltungszentrums, und
d) das Eingeben, falls erforderlich, der für die Funktion des Verfahrens erforderlichen Operationsparameter;
wobei die zweite Phase aufweist:
e) das Anwenden eines ersten Programmierungsgesetzes auf eine Zentralverarbeitungseinheit (UCT) (2) des Verwaltungszentrums, welches eine Restrukturierung der Originaldatei (FO) (8) in Form mehrerer unabhängiger und identifizierbarer Blöcke (13) ermöglicht, deren konstante oder variable Größe (I) und Zahl (K) in dem ersten Gesetz bestimmt sind, wobei die Konkatenation der Blöcke in der Folge eine Wiederherstellung der Originaldatei (FO) (8) nachträglich ermöglichen muss;
wobei die Blöcke nach einem Format strukturiert sind, das ein "Daten"-Feld (10) für binäre Elemente (eb) der jeweiligen, einem jeden der Blöcke spezifisch zugeordneten Daten aufweist und mehrere Felder aufweist, welche für Informationen reserviert sind, die jeweils ein nützliches Merkmal in Bezug auf den Block angeben, wobei die Informationen einen einzigartigen Identifizierungscode des Blocks (CI) (9) und gegebenenfalls die Größe (I) (14) des Blocks enthalten,
wobei die Gesamtheit der derart gebildeten und formatierten Blöcke eine Block-Datei (FB) (15) bildet, welche in dem Speicher (5, 5') gespeichert wird;
und wobei die dritte Phase aufweist:
f) das Anwenden eines zweiten Programmierungsgesetzes durch die Zentralverarbeitungseinheit (2), welches das Übertragen (17, 20) der Blöcke der Block-Datei (FB) (15) zu mindestens einer von mehreren Speicherstellen (21) Dritter ermöglicht, wobei jeder Block mindestens einer Speicherstelle entspricht,
wobei die Speicherstellen lokal, entfernt oder nach Art einer "Cloud" verarbeitet sind und ferner intern sämtliche herkömmlichen Sicherungsmittel verwenden können;
g) das Einfügen (17) eines zusätzlichen Feldes (19) in das Format jedes Blocks, welches Feldes dazu vorgesehen ist, die Zahl und die Adressen der mindestens jeweils einen Speicherstelle Dritter zu enthalten, an welche der Block übertragen werden soll, wobei die Gesamtheit der derart formatierten Blöcke in einer zweiten Block-Datei (FBS) (23) zusammengefasst werden;
h) das anschließend durch sämtliche geeigneten Übertragungsmittel (21), sei es blockweise oder speicherstellenweise, erfolgende Übertragen (20) der Gesamtheit der Blöcke der zweiten Block-Datei (FBS) (23, 24) zu den jeweiligen Speicherstellen Dritter;
i) das nachfolgende Erstellen eines ersten Typs einer finalen kartographischen Tabelle (TC) (22) anhand der zweiten Block-Datei (FBS) (23), welche in Form einer Tabelle mit zwei Spalten vorliegt, wobei die erste die Identifizierungscodes (CI) der Blöcke speichert und die zweite die Zahl und die Adressen der mindestens einen Speicherstelle Dritter jedem der Identifizierungscodes (CI) zuordnet; und
j) das Übertragen der derart erhaltenen finalen kartographischen Tabelle (IC) (22) in den Speicher des Systems (5) und das Sichern derselben.

2. Verfahren nach Anspruch 1, ferner **dadurch gekennzeichnet, dass** die in den Blöcken der Block-Dateien (FB) (15) enthaltenen digitalen Daten nach geeigneten Verschlüsselungsmodi (mcht) (28) verschlüsselt (26) werden, wobei ein Verschlüsselungsmodus einen Verschlüsselungsalgorithmus und einen Verschlüsselungsschlüssel aufweist und von einem Block zum anderen variieren kann und die Block-Datei (FB) (15) auf diese Weise in eine verschlüsselte Daten enthaltende Block-Datei (FB*) (29) transformiert werden kann, und dass zu Sicherheitszwecken eine Verschlüsselungstabelle (Tcht) (30) erstellt wird, die es ermöglicht, die Übereinstimmung zwischen einem durch seinen einzigartigen Identifizierungscode (CI) bestimmten Block und den zur Verschlüsselung der Daten des Blocks verwendeten Verschlüsselungsmodi (mcht) zu gewährleisten,
wobei die Verschlüsselungstabelle (Tcht) (30) dazu vorgesehen ist, mit der kartographischen Tabelle (TC) (22) kombiniert zu werden, um einen zweiten Typ von finaler kartographischer Tabelle (TCH) (31) zu erstellen, welche für jeden Block die einzigartige Übereinstimmung zwischen dem Identifizierungscode (CI), der Zahl (j) und den Adressen der Speicherstellen Dritter (si) und dem Verschlüsselungsmodus (mcht) angibt.

3. Verfahren nach Anspruch 1 oder Anspruch 2, ferner **gekennzeichnet durch** das nach mehreren möglichen Fingerabdruckberechnungsalgorithmen (ae) erfolgende Berechnen (6) eines Fingerabdrucks (E) jedes im Schritt e) (13) gebildeten und formatierten Blocks, und das parallele Erstellen einer Fingerabdrucktabelle (TE) (16), welche die einzigartige Verbindung zwischen dem Identifizierungscode des Blocks (CI) und dem Fingerabdruck (E) des Blocks herstellt, welcher dem verwendeten Fingerabdruckberechnungsalgorithmus (ae) zugeordnet ist,
**durch** das anschließende Kombinieren der Fingerabdrucktabelle (TE) (16) mit:
- entweder der finalen kartographischen Tabelle (TC) (22), um einen dritten Typ von finaler kartographischer Tabelle (TCE) (25) zu bilden, der drei Spelten aufweist, welche den Identifizierungscode (CI), die Zahl und die Adressen der Speicherstellen Dritter (j, si) und den Fingerabdruck plus den Fingerabdruckberechnungsalgorithmus (E, ae) auf einzigartige Weise für jeden Block miteinander verbinden,
- oder der Verschlüsselungstabelle (Tcht) (30), um einen vierten Typ von finaler kartographischer Tabelle (TCE) (25) zu bilden, der vier Spelten aufweist, welche den Identifizierungscode (CI), die Zahl und die Adressen der Speicherstellen Dritter (j, si), den Fingerabdruck plus den Fingerabdruckberechnungsalgorithmus (E, ae) und den Verschlüsselungsmodus (mcht) auf einzigartige Weise für jeden Block miteinander verbinden, und
**durch** das Übertragen der erhaltenen finalen kartographischen Tabelle (TC, TCE, TCH, TCHE) (22, 25, 31, 32) in den Speicher des Systems (5) und das Sichern derselben.

4. Verfahren nach den Ansprüchen 1, 2 und 3, ferner **dadurch gekennzeichnet, dass** es eine Modulation eines Sicherheitsniveaus (NS) der Speicherung oder der Archivierung eines Satzes digitaler Daten, die in einer Originaldatei (FO) (8) zusammengefasst sind, ermöglicht, wobei eine Entscheidungstabelle (TD) (33) Kombinationen von Funktionsmodi und Operationsparametern definiert, welche zu unterschiedlichen, festgelegten Sicherheitsniveaus (NS) führen, wobei ein Sicherheitsniveau (NS) bei der Eingabe der Originaldatei (FO) (8) gewählt werden kann,
wobei die Funktionsmodi und die Operationsparameter ein Sicherheitsniveau (NS) definieren, das sich bezieht auf:
- die Zahl der Blöcke (k);
- die feste oder variable Größe (I) der Blöcke;
- die Gesamtzahl der Speicherstellen Dritter (j);
- die Zahl der Exemplare, das heißt die Zahl der verschiedenen Speicherstellen Dritter, die denselben Block speichern;
- das Ausführen oder das Nicht-Ausführen der Berechnung (6) von Fingerabdrücken von Blöcken (E);
- das Ausführen oder das Nicht-Ausführen des Datenverschlüsselungsvorgangs;
wobei die Zentralverarbeitungseinheit (UCT) (2) nach der Auswahl eines gegebenen Sicherheitsniveaus (NS) die in der Entscheidungstabelle (TD) (33) definierten Funktionsmodi und Operationsparameter berücksichtigt, welche dem gewählten Sicherheitsniveau (NS) entsprechen, und diese in einen zusätzlichen Hilfs-Cachespeicher (34) überträgt, der mit der Zentralverarbeitungseinheit (UCT) (2) verbunden ist und für Modi und Parameter reserviert ist, die zum Erhalten des Sicherheitsniveaus verwendet wurden, und danach die jeweiligen, der Auswahl zugeordneten Befehle durchführt;
wobei die verschiedenen erhaltenen finalen kartographischen Tabellen (TC, TCE, TCH, TCHE) (22, 25, 31, 32) in den Speicher des Systems (5) übertragen und gesichert werden.

5. Verfahren nach Anspruch 1, ferner **dadurch gekennzeichnet, dass** es eine vierte Phase bezüglich der auf Anfrage erfolgenden Wiederherstellung der Originaldatei (FO) mit den folgenden Schritten aufweist:
k) das Ausgeben eines Signals (S(FO*)) von Seiten des Verwaltungszentrums (1) an sämtliche gewidmeten und in der kartographischen Tabelle (TC), welche in dem Speicher des Systems (5) gehalten ist, verzeichneten Speicherstellen zum Abrufen sämtlicher durch die spezifische Flagge (FO*) der Originaldatei (FO) (8) identifizierten Blöcke aus den an den gewidmeten Stellen vorhandenen Speichereinrichtungen;
l) das Empfangen sämtlicher identifizierter Blöcke, welche auf diese Weise von den gewidmeten Speicherstellen übertragen wurden, in einer Wiederherstellungs-Block-Datei (FR) (36), die in einem Cachespeicher (5') gehalten ist;
m) das Erstellen einer ersten Datei (FR1) (38) aus der Wiederherstellungs-Block-Datei (FR) (36), in welcher sämtliche identifizierten Blöcke, die nur ein einziges Mal auftreten, enthalten sind, und einer zweiten Datei (FB2) (39), in welcher nur Blöcke auftreten, die an mehr als einer gewidmeten Speicherstelle Dritter gespeichert sind:
n) das in der ersten Datei (FR1) (38) und für jeden Block (CIᵢ) zum Zweck der Überprüfung der Integrität der Daten erfolgende Vergleichen der Zahl der binären Elemente (ebᵢ) mit dem Wert (iᵢ), der in dem die Größe des entsprechenden Blocks angebenden Feld angegeben ist;
o) das Extrahieren der binären Elemente (ebᵢ) sämtlicher Blöcke der ersten Datei (FR1) (38) in einer festgelegten Reihenfolge von den Blöcken bei der ursprünglichen Bildung der Blöcke (13) zugewiesenen laufenden Nummern (NO), und das Anwenden einer Konkatenationsoperation (42) auf diese, um die Originaldatei (FO_{bis}) (43) wiederherzustellen;
p) zur Prüfung der Integrität der Originaldatei (FO) (8) und der wiederhergestellten Originaldatei (FO_{bis}) (43), das Vergleichen des Fingerabdrucks (E(FO)) der Originaldatei (FO), der mit seinem Fingerabdruckberechnungsalgorithmus (ae) in dem Speicher (5) des Verwaltungszentrums (1) gehalten ist, mit einem Fingerabdruck (E(FO_{bis})) (44) der wiederhergestellten Originaldatei, der nach demselben Algorithmus (ae) berechnet wurde.

6. Verfahren nach den Ansprüchen 2 und 5, ferner **dadurch gekennzeichnet, dass**, da die Verschlüsselung zur Erhöhung der Vertraulichkeit der gespeicherten Daten gewählte wurde, das Durchführen der Schritte k) und l) zu der genannten Wiederherstellungs-Block-Datei (FR) (36) führt, welche somit einen Satz von Blöcken enthält, in denen die Daten verschlüsselt sind, wobei die Blöcke unter Verwendung des Verschlüsselungsmodus (mcht) entschlüsselt werden, der jedem Block (CI) entspricht, der in der finalen kartographischen Tabelle (TCH) (31) enthalten ist, die in dem Speicher (5) gehalten ist,
wobei die Schritte m) bis p) funktionsmäßig unverändert bleiben.

7. Verfahren nach den Ansprüchen 3 und 5, ferner **dadurch gekennzeichnet, dass**, da die Berechnung des Fingerabdrucks jedes Blocks zur Erhöhung der Integrität der Daten gewählt wurde, das Durchführen der Schritte k) und l) zu der genannten Wiederherstellungs-Block-Datei (FR) (36) führt, anhand welcher ein Fingerabdruck jedes Blocks mittels des Fingerabdruckberechnungsalgorithmus (aeᵢ), der in der finalen kartographischen Tabelle (TCE) (25) im Speicher gehalten ist, für jeden Block (CIᵢ) berechnet wird, und mit dem in der finalen kartographischen Tabelle (TCE) (25) vorhandenen entsprechenden Fingerabdruck (Eᵢ), um im Falle der Gleichheit die Qualität der Integrität der Daten nach deren Speicherung zu bestätigen.

8. Verfahren nach den Ansprüchen 4, 5, 6 und 7, ferner **dadurch gekennzeichnet, dass**, da das Implementieren der Entscheidungstabelle (TD) (33) zu der gleichzeitigen Auswahl der Optionen der Verschlüsselung der Daten und der Blockfingerabdruckberechnung führen kann, um eine maximale Sicherung der Daten zu gewährleisten, die Schritte k) und l) zu der Wiederherstellungs-Block-Datei (FR) (36) führen, deren Blöcke dem in Anspruch 6 beschriebenen Entschlüsselungsvorgang und dem im Anspruch 7 beschriebenen Test des Vergleichs der Blockfingerabdruckwerte unterzogen werden, indem die in der finalen kartographischen Tabelle (TCHE) (32), welche im Speicher (5) gehalten ist, enthaltenen Informationen verwendet werden, wobei jeweils der Identifizierungscode (CI) des Blocks, der Verschlüsselungsmodus (mcht), der Fingerabdruckwert und dessen Berechnungsalgorithmus (E, ae) einander zugeordnet werden, wobei die Schritte m) bis p) funktionsmäßig unverändert bleiben.

## Claims

1. A method for improving the temporary or permanent digital data securement for storing or archiving purposes, **characterised in that** it includes a new combination of three distinct phases, said method being implemented under control of a management centre (G) (1):
the first phase consisting in:
a) identifying and authenticating the request (R_{q}) of a user wishing to protect his/her own digital data presented as an origin file (F0) (8);
b) calculating in (6) a fingerprint (E(F0)) of the origin file (F0) (8) according to appropriate algorithms in order to constitute an evidence of the existence of said data on the date of said request (R_{q}), as well as guarantee the origin and integrity of said data through relying on an electronic signature (7) or an electronic seal (7);
c) transferring said digital data and the fingerprint (E(F0)) of said origin file (F0) (8) in a memory of a system (5) of the management centre, and
d) entering, if need be, operational parameters required for the operation of said method;
the second phase consisting in:
e) applying to the central processing unit (UCT) (2) a first programming law enabling the origin file (F0) (8) to be restructured in the form of a plurality of independent and identifiable blocks (13) the constant or variable size (l) and number (k) of which are determined in said first law, wherein the concatenation of said blocks must enable said origin file (F0) (8) to be subsequently reconstituted,
said blocks being structured according to a format having a "data" field (10) intended to the binary elements (eb) of the respective data specifically assigned to each of said blocks and several fields reserved to several information each indicating a useful characteristic related to said block, said information comprising a single identification code of the block (CI) (9), and possibly the size (1) (14) of said block,
the set of the blocks thus formed and formatted making up a file of blocks (FB) (15), which is recorded in the memory (5, 5');
and the third phase consisting in:
f) applying by the central processing unit (2) a second programming law enabling the blocks of the file of blocks (FB) (15) to be transferred (17, 20) to at least one of a plurality of storage sites (21), each block corresponding to at least one storage site,
wherein the storage sites can be local, distant or processed in a "cloud" mode and can further use, internally, all the conventional securement means;
g) inserting in (17) in the format of each block a further field (19) intended to contain the number and addresses of the at least one respective third-party site to which said block has to be transferred, all of the blocks thus formatted being gathered in a second file of blocks file (FBS) (23);
h) then transferring in (20), by any appropriate transmission means (21), either block by block, or per site, all of the blocks of said second file of blocks (FBS) (23, 24) to the respective third-party sites;
i) then establishing, from said second file of blocks (FBS) (23) a first type of final mapping table (TC) (22) having the form of a table with two columns, the first one recording the identification codes (CI) of the blocks and the second one associating with each said identification code (CI) the number and address(es) of the at least one third-party storage site(s); and
j) transferring the final mapping table (TC) (22) thus obtained into the memory of the system (5) and securing it.

2. The method according to claim 1, further **characterised by** encrypting (26) the digital data contained in the blocks of the file of blocks (FB) (15) according to appropriate encryption modes (mcht) (28), an encryption mode comprising an encryption algorithms and an encryption key, that can vary from block to block, thus transforming the file of blocks (FB) (15) into a file of blocks (FB*) (29) containing the encrypted data;
and by establishing, for security purposes, an encryption table (Tcht) (30) enabling matching between a block determined by its single identification code (CI) and the encryption modes (mcht) implemented to encrypt the data of said block;
said encryption table (Tcht) (30) being intended to be combined with said mapping table (TC) (22) to establish a second type of final mapping table (TCH) (31) indicating, for each block, the single matching between identification code (CI), number (j) and addresses of the third-party storage sites (si) and encryption mode (mcht).

3. The method according to claim 1 or claim 2, further **characterised by** calculating (6), according to several possible algorithms (ae), a fingerprint (E) of each block formed and formatted in step e) (13) and building in parallel a fingerprint table (TE) (16) establishing the single link between block identification code (CI) and fingerprint (E) of said block associated with the algorithm (ae) used;
said fingerprint table (TE) (16) being then combined with:
- either the mapping table (TC) (22) to form a third type of final mapping table (TCE) (25), with three columns uniquely connecting for each block, identification code (CI), number and addresses of the storage third-party sites (j, si) and fingerprint plus algorithm (E, ae),
- or the encrypted mapping table (Tcht) (30) to form a fourth type of final mapping table (TCHE) (32) with four columns uniquely connecting, for each block, identification code (CI), number and addresses of the storage third-party sites (j, si), fingerprint plus algorithm (E, ae), and encryption mode (mcht); the final mapping table (TC, TCE, TCH, TCHE) (22, 25, 31, 32) being transferred into the system memory (5) and secured.

4. The method according to claims 1, 2 and 3, further **characterised in that** it makes it possible a modulation of the security level (NS) suitable for storing or archiving a set of digital data gathered in an origin file (F0) (8), a decision table (TD) (33) defines combinations of the functional modes and operational parameters which result in different determined security levels (NS), a security level (NS) can be selected upon entering the origin file (F0) (8),
the functional modes and operational parameters defining a security level (NS) related to:
- the number (k) of blocks;
- the fixed or variable size (l) of the blocks;
- the total number of third party sites (j);
- the number of copies, that is the number of different third party sites storing the same block;
- performing or not the calculation (6) of fingerprints (E);
- performing or not the data encryption process;
after selecting a given security level (NS), the central processing unit (UCT) (2) takes into account the functional modes and operational parameters defined in the decision table (TD) (33) matching the selected security level (NS) and transfers them into a further auxiliary cache memory (34) connected to the central processing unit (UCT) (2) and reserved to the modes and parameters used for obtaining said security level (NS), and then performs the respective instructions associated with said selection;
the different final mapping tables (TC, TCE, TCH, TCHE) (22, 25, 31, 32) being transferred into the system memory (5) and secured.

5. The method according to claim 1, further **characterised in that** it includes a fourth phase related to reconstitution, upon request, of the origin file (F0) including the following steps of:
k) emitting, from the management centre (1), to all the dedicated storage sites listed in the mapping table (TC) preserved in the system memory (5), a signal (S(F0*)) for extracting, from the storage means present in said dedicated sites, all the blocks identified by the flag (F0*) specific to the origin file (F0) (8);
l) receiving all the identified blocks thus transmitted by the dedicated storage sites into a reconstitution file of blocks (FR) (36) preserved in a cache memory (5');
m) from the reconstitution file of blocks (FR), creating a first file (FR1) (38) in which all the identified blocks appear only once, and a second file (FR2) (39) in which only the blocks stored in more than one dedicated third-party site appear;
n) for data integrity checking purposes, comparing, in the file (FR1) (38), and for each block (CIᵢ), the number of binary elements (ebᵢ) with the value (lᵢ) indicated in the corresponding block size field;
o) extracting the binary elements (ebᵢ) from all the blocks of the first file (FR1) (38) in a planned order of the order numbers (ON) that were assigned to the blocks during the initial formation of the blocks (13) and applying to them a concatenation operation in (42) to reconstitute the origin file (F0_{bis}) (43);
p) in order to check the integrity of the origin file (F0) (8) and the reconstituted origin file (F0_{bis}) (43), comparing the fingerprint (E(F0)) of the origin file (F0) preserved with its calculation algorithm (ae) in the memory (5) of the management centre (1) with a fingerprint (E(F0_{bis})) (44) of the reconstituted origin file calculated according to the same algorithm (ae).

6. The method according to claims 2 and 5, further **characterised in that**, with the encryption option being selected to enhance confidentiality of the data stored, the implementation of steps k) and l) leads to said reconstitution file of blocks (FR) (36), thereby containing a set of blocks in which the data are encrypted; the blocks being deciphered using the ciphering mode (mcht) matching each block (CI) as contained in the final mapping table (TCH) (31) preserved in the memory (5);
the other steps from m) to p) remaining functionally unchanged.

7. The method according to claims 3 and 5, further **characterised in that**, with the fingerprint calculation option of each block being selected to enhance data integrity, the implementation of steps k) and l) leads to said reconstitution file of blocks (FR) (36) from which a fingerprint of each block is calculated with the same algorithm (aeᵢ) preserved in the memory in the final mapping table (TCE) (25) for each block (Cᵢ), and is compared to the corresponding fingerprint (Ei'), to reinforce, in case of equality, the integrity quality of data after storing them.

8. The method according to claims 4, 5, 6 and 7, further **characterised in that**, the implementation of the decision table (TD) (33) being able to lead, in order to guarantee a maximum data securement, to the simultaneous selection of the encryption option of these data and of the option of block fingerprint calculation; steps k) and l) lead to said reconstitution file of blocks (FR) (36) the blocks of which undergo the encryption process of claim 6 and the comparison test of the block fingerprint values of claim 7 by using information from the mapping table (TCHE) (32), preserved in the memory (5), by associating respectively the identification code (CI) of the block, the encryption mode (mcht), the fingerprint value and its calculation mode (E, ae); the other steps from m) to p) remaining functionally unchanged.
